# EUROPÄISCHE PATENTANMELDUNG

(11) **EP 4 650 255 A1**
(43) Veröffentlichungstag der Anmeldung: **19.11.2025**
(21) Anmeldenummer: 25173231.9
(22) Anmeldetag: 29.04.2025
(51) Int. Cl.: B62D 53/08, B60D 1/01, B62D 65/02, B66C 1/10, B66F 7/26

(54) **ANSCHLAGMITTEL FÜR EINE SATTELKUPPLUNG**

(30) Priorität: 13.05.2024 DE 202024102450 U
(71) Anmelder: Hazet-Werk Hermann Zerver GmbH & Co. KG, 42857 Remscheid (DE)
(72) Erfinder: STARK, MARTIN, 44653 HERNE (DE); ROMPF, MARCO, 35649 Bischoffen (DE)
(74) Vertreter: Ksoll, Peter

(57) **Zusammenfassung**

Die Erfindung betrifft ein Anschlagmittel (1) für eine Sattelkupplung (2), aufweisend eine Traverse (3) und einen Zugsattelzapfen (4) zur Kopplung mit der Sattelkupplung (2), wobei der Zugsattelzapfen (4) mit der Traverse (3) koppelbar ist und der Zugsattelzapfen (4) ein Kopplungselement (6) zur Kopplung des Anschlagmittels (1) mit einer Hebevorrichtung aufweist, wobei die Traverse (3) wenigstens zwei Fixierungselemente (7) zur Fixierung der Traverse (3) relativ zu einer Sattelkupplungsplatte (8) der Sattelkupplung (2) aufweist.

## Beschreibung

Die vorliegende Erfindung betrifft ein Anschlagmittel für eine Sattelkupplung gemäß den Merkmalen des Anspruchs 1.

Eine Sattelkupplung verbindet eine Zugmaschine, insbesondere einen LKW, mit einem dazugehörigen Sattelauflieger. Dafür ist die Sattelkupplung selbst mit der Zugmaschine verbunden, während an dem Sattelauflieger ein Zugsattelzapfen befestigt ist. Über den Zugsattelzapfen, welcher in eine Aufnahme der Sattelkupplung einrasten kann, wird der Sattelauflieger mit der Zugmaschine gekoppelt.

Die Sattelkupplung muss das Gewicht des Sattelaufliegers tragen und die freie Beweglichkeit des Sattelaufliegers ermöglichen. Die zumeist aus Stahl gefertigten Sattelkupplungen weisen in der Regel ein Gewicht zwischen 100 kg und 330 kg auf. Muss die Sattelkupplung für Wartungszwecke oder im Falle eines Defekts sicher von

der Zugmaschine entfernt werden, ist dies nur mit dafür geeigneten Hebevorrichtungen möglich.

Hebevorrichtungen, welche ein Anschlagmittel zur Kopplung mit der Sattelplatte aufweisen, sind im Stand der Technik bekannt. Als Anschlagmittel wird zumeist ein Zugsattelzapfen verwendet, an dem ein Befestigungsmittel zur Kopplung mit der Hebevorrichtung angebracht ist. Der Zugsattelzapfen kann in die Aufnahme der Sattelkupplung eingeführt und zusammen mit dieser angehoben werden.

Ein entsprechendes Hebesystem wir beispielsweise in der US 11,787,676 B2 offenbart. Das Hebesystem weist eine L-förmige Stange auf, an deren Ende ein Zugsattelzapfen zur Kopplung mit einer Sattelkupplung angeordnet ist. Da das Anschlagmittel dieses Hebesystems lediglich aus dem Zugsattelzapfen ausgebildet ist, kann es aufgrund der beweglichen Kopplung zwischen dem Zugsattelzapfen und der Sattelkupplung während des Hebevorgangs zu ungewollten und unkontrollierten Bewegungen, beispielsweise einem Pendeln der Sattelkupplung kommen. Auch ein Lösen des Zugsattelzapfens aus der Sattelkupplung bei starken Bewegungen ist möglich, insbesondere wenn die Sattelkupplung im Bereich der Zugsattelzapfenverriegelung einen Defekt aufweist. Aufgrund des Gewichts der Sattelkupplung können starke Bewegungen und/oder ein Lösen der Sattelkupplung bedingt durch Schwerpunktverschiebungen für einen Nutzer gefährlich sein.

Vor diesem Hintergrund ist die Aufgabe der vorliegenden Erfindung ein verbessertes Anschlagmittel für eine Sattelkupplung aufzuzeigen, welches insbesondere ein sicheres Heben und Transportieren der Sattelkupplung ermöglicht.

Gelöst wird diese Aufgabe durch ein Anschlagmittel für eine Sattelkupplung gemäß den Merkmalen des Anspruchs 1.

Vorteilhafte Ausführungsvarianten der Erfindung sind Gegenstand der abhängigen Ansprüche.

Das erfindungsgemäße Anschlagmittel für eine Sattelkupplung weist eine Traverse und einen Zugsattelzapfen, der auch als Königszapfen bezeichnet wird, zur Kopplung mit einer Sattelkupplung auf. Die Sattelkupplung selbst ist im Wesentlichen durch eine

Sattelkupplungsplatte ausgebildet, welche einen Aufnahmebereich zur Aufnahme des Zugsattelzapfens und einen Arretiermechanismus aufweist, um den Zugsattelzapfen in der Aufnahme zu sichern.

Der Zugsattelzapfen ist mit der Traverse koppelbar und weist ein Kopplungselement zur Kopplung des Zugsattelzapfens und somit des Anschlagmittels mit einer Hebevorrichtung auf. Über die Hebevorrichtung kann die mit dem Anschlagmittel gekoppelte Sattelkupplung angehoben und transportiert werden.

Erfindungsgemäß weist die Traverse wenigstens zwei Fixierungselemente zur Fixierung der Traverse relativ zu der Sattelkupplungsplatte der Sattelkupplung auf. Da der Zugsattelzapfen beweglich in der Aufnahme der Sattelkupplung gelagert ist, stellen die Fixierungselemente sicher, dass sich die Sattelkupplung und das Anschlagmittel insbesondere während des Hebevorgangs nicht relativ zueinander bewegen können. Somit wird ein Ausschlagen oder ein Pendeln der Sattelplatte während des Hebevorgangs vermieden.

Der Zugsattelzapfen kann dauerhaft oder lösbar mit der Traverse gekoppelt sein. Eine lösbare Kopplung hat den Vorteil, dass je nach Ausgestaltung und Dimensionierung der Sattelkupplung unterschiedlich ausgebildete Zugsattelzapfen mit der Traverse gekoppelt werden können.

In einer bevorzugten Ausführungsvariante der Erfindung weist die Traverse drei Tragarme auf. Die wenigstens zwei Fixierungselemente sind bevorzugt an wenigstens zwei der Tragarme abgeordnet. Mithin ist an zumindest zwei der Tragarme ein Fixierungselement angeordnet. Besonders vorteilhaft ist es, wenn an jedem der drei Tragarme ein Fixierungselement angeordnet ist. Die drei Tragarme ermöglichen eine weiträumige Abdeckung der Sattelkupplungsplatte, bei gleichzeitiger Gewichtseinsparung der Traverse. Die Ausbildung von drei Tragarmen mit entsprechender Anordnung der Fixierungselemente hat somit den Vorteil, dass ein Kippen bzw. eine Verlagerung der Sattelkupplungsplatte relativ zur Traverse effektiv verhindert werden kann.

Vorzugsweise weist die Traverse eine Öffnung zur Kopplung mit dem Zugsattelzapfen auf, dergestalt, dass der Zugsattelzapfen die Öffnung im gekoppelten Zustand durchgreift und mit einem Sicherungselement fixierbar ist. Diese Ausgestaltung ermöglicht einen schnellen Wechsel der Zugsattelzapfen durch einen Nutzer des Anschlagmittels.

Insbesondere ist das Sicherungselement ein Federstecker, wobei der Zugsattelzapfen eine Sicherungsöffnung aufweist, in der der Federstecker einführbar ist. Der Zugsattelzapfen kann somit abschnittsweise durch die Öffnung der Traverse hindurchgeführt werden, bis die Sicherungsöffnung des Zugsattelzapfens auf der dem Kopplungsbereich des Zugsattelzapfens gegenüberliegenden Seite der Traverse positioniert ist. Anschließend kann der Federstecker in die Sicherungsöffnung eingeführt werden, so dass der Zugsattelzapfen sicher mit der Traverse gekoppelt ist.

Die Öffnung der Traverse ist bevorzugt kreisförmig ausgebildet und weist gegenüberliegende Aussparungen auf. Die Form der Öffnung entspricht in dieser Ausführungsvariante der eines gespiegelten Schlüsselloches. Hierdurch kann der Zugsattelzapfen mit bereits montierter Ringschraube schnell ausgetauscht werden. Ohne das im Rahmen der Erfindung vorgesehene Schlüssellochprinzip würde durch die Ringschraube geometrisch bedingt ein schneller Austausch nicht möglich sein. Ringschraube und Zuganker müssten sonst vom Nutzer für den Austausch voneinander gelöst werden. Dies birgt ein Risiko, was ausgeschlossen werden soll.

Besonders bevorzugt ist die Öffnung im Bereich des Gewichtsschwerpunkts des Anschlagmittels angeordnet. Im mit der Hebevorrichtung gekoppelten Zustand ist das Anschlagmittel somit im Wesentlichen horizontal ausgerichtet.

In einer vorteilhaften Ausführungsvariante weist die Traverse eine langlochförmige Öffnung auf, wobei ein Sicherungsanschlag mit der langlochförmigen Öffnung koppelbar ist. Insbesondere ist die Traverse so ausgebildet, dass die langlochförmige Öffnung bei der Kopplung des Anschlagmittels mit der Sattelkupplung die Sattelkupplung an einer Seite abschnittsweise überragt. Besonders bevorzugt überragt die langlochförmige Öffnung die Seite der Sattelkupplung, welche der Öffnung des Aufnahmebereichs der Sattelkupplung gegenüberliegt. Der

Sicherungsanschlag kann in die langlochförmige Öffnung eingeführt und fixiert werden. Ist das Anschlagmittel mit der Sattelkupplung gekoppelt, ist der Sicherungsanschlag so angeordnet, dass dieser mit der der Öffnung des Aufnahmebereichs der Sattelkupplung gegenüberliegenden Seite der Sattelkupplung in Verbindung steht, dergestalt, dass ein Lösen des Zugsattelzapfens des Anschlagmittels aus der Aufnahme der Sattelkupplung heraus nicht möglich ist. Dies hat den Vorteil, dass sich der Zugsattelzapfen auch bei einem defekten Arretiermechanismus der Sattelkupplung während des Transports bzw. während des Hebevorgangs nicht aus dem Aufnahmebereich lösen kann. Zudem fixiert der Sicherungsanschlag auch die Traverse relativ im Hinblick auf die Sattelkupplungsplatte der Sattelkupplung. Somit kann auch der Sicherungsanschlag als Fixierelement fungieren. Bevorzugt ist die langlochförmige Öffnung auf einem Tragarm der Traverse angeordnet.

Die langlochförmige Öffnung ist vorzugsweise aus mehreren ineinander übergehenden Löchern ausgebildet. Die ineinander übergehenden Löcher bilden jeweils einen Aufnahmebereich für den Sicherungsanschlag aus. So ist es möglich, unterschiedlich dimensionierte Sattelkupplungen mit dem Sicherungsanschlag zu sichern. Abhängig von der Größe der Sattelkupplung kann der Sicherungsanschlag in ein näher zum Zugsattelzapfen gelegenes Loch positioniert werden oder in ein zum Zugsattelzapfen weiter entferntes Loch. So ist der Abstand zwischen Zugsattelzapfen und Sicherungsanschlag an die Dimension der Sattelkupplung anpassbar.

Der Sicherungsanschlag selbst ist bevorzugt als Sicherungsstift ausgebildet und weist einen Handgriff und einen Anschlagstift zur Sicherung der Sattelkupplung auf. Zwischen dem Handgriff und dem Anschlagstift ist bevorzugt ein Rastmechanismus angeordnet. Dieser ist aus einem kreisförmigen Rastelement und einer Druckfeder ausgebildet. Ist der Sicherungsstift in einem Loch der langlochförmigen Öffnung positioniert, greift das Rastelement in das Loch ein und fixiert den Sicherungsstift in seiner Position. Wird der Sicherungsstift von einem Nutzer über den Handgriff nach oben, mithin weg von dem Loch gezogen, wird die Druckfeder zusammengestaucht und das Rastelement aus dem Loch gezogen. In diesem Zustand kann der Sicherungsstift entlang der langlochförmigen Öffnung verschoben und an einem anderen Loch positioniert werden. Löst der Nutzer seinen Griff, wird das Rastelement durch die Druckfeder in das ausgewählte Loch gedrückt und der Sicherungsstift ist in seiner neuen Position fixiert.

Das Kopplungselement zur Kopplung des Anschlagmittels mit der Hebevorrichtung ist bevorzugt eine Ringschraube. So ist es möglich, unterschiedlichste Hebesysteme schnell und einfach mit dem Anschlagmittel zu verbinden.

Die Fixierungselemente sind bevorzugt Fixierschrauben. Zur Aufnahme der Fixierschrauben weist die Traverse entsprechende Durchgangslöcher mit einem Gewinde auf. Die Schrauben durchgreifen die Durchgangslöcher der Traverse und können so weit festgeschraubt werden, bis die Enden der Fixierschrauben in Kontakt mit der Sattelkupplungsplatte kommen. Durch ein Festziehen der Fixierschrauben wird die Sattelkupplungsplatte gegenüber der Traverse fixiert, so dass unkontrollierte Bewegungen oder ein Pendeln der Sattelkupplung während des Hebe- bzw. Transportvorgangs vermieden werden.

Besonders bevorzugt weisen die Fixierschrauben endseitige Handgriffe auf, so dass diese ohne zusätzliches Werkzeug von einem Nutzer festgezogen und wieder gelöst werden können.

Die Fixierschrauben können an ihrem den Handgriffen gegenüberliegenden Enden Gummistutzen aufweisen. Die Gummistutzen ermöglichen einen sicheren Sitz zwischen Fixierschraube und Sattelkupplungsplatte und sorgen zudem dafür, dass die Sattelkupplungsplatte durch die Fixierschrauben nicht beschädigt wird.

Es hat sich weiterhin als vorteilhaft herausgestellt, dass wenigstens ein Haltegriff mit der Traverse verbunden ist. Da das Anschlagmittel mit daran gekoppelter Sattelkupplung schwenkbar mit der Hebevorrichtung verbunden sein kann, kann durch den Haltegriff das Anschlagmittel samt Sattelkupplung von dem Nutzer geführt werden.

Die drei Tragarme der Traverse sind bevorzugt jeweils in einem Winkel zwischen 90° und 180° zueinander angeordnet. Dies hat den Vorteil, dass ein möglichst breiter Bereich der Sattelkupplungsplatte durch die Fixierelemente abgedeckt werden kann.

Mithin ist eine sichere Fixierung zwischen der Traverse und der Sattelkupplungsplatte sichergestellt.

Die Traverse kann einstückig und werkstoffeinheitlich hergestellt sein.

Alternativ kann die Traverse ein erstes Tragelement und ein zweites Tragelement aufweisen. Das erste Tragelement ist in dieser Ausführungsvariante endseitig mit einem mittleren Abschnitt des zweiten Tragelements gekoppelt. Das erste Tragelement bildet den ersten Tragarm aus und das zweite Tragelement bildet den zweiten und den dritten Tragarm aus. Der zweite und dritte Tragarm erstrecken sich in dieser Ausführungsvariante jeweils vom mit dem ersten Tragelement gekoppelten mittleren Abschnitt des zweiten Tragelements. Diese Ausgestaltungsvariante hat den Vorteil, dass die Traverse vor der Verbindung des ersten und zweiten Tragelements mit einem geringeren Packmaß transportiert werden kann. Das erste und zweite Tragelement können beispielsweise durch Schraubverbindungen miteinander gekoppelt werden.

Vorzugsweise ist die Traverse aus einem Stahlwerkstoff hergestellt.

Weitere Vorteile, Eigenschaften und Aspekte der Erfindung sind Gegenstand der nachfolgenden Beschreibung. Diese dient dem einfachen Verständnis der Erfindung. Es zeigen:
- Figur 1: eine erste Ausführungsvariante des erfindungsgemäßen Anschlagmittels in einer Perspektive;
- Figur 2: die erste Ausführungsvariante des erfindungsgemäßen Anschlagmittels in einer Seitenansicht;
- Figur 3: die erste Ausführungsvariante des erfindungsgemäßen Anschlagmittels in einer Draufsicht;
- Figur 4: eine zweite Ausführungsvariante des erfindungsgemäßen Anschlagmittels in einer Draufsicht;
- Figur 5: die zweite Ausführungsvariante des erfindungsgemäßen Anschlagmittels in einer ersten Seitenansicht und
- Figur 6: die zweite Ausführungsvariante des erfindungsgemäßen Anschlagmittels in einer zweiten Seitenansicht.

Für gleiche oder einander entsprechende Bauteile werden dieselben Bezugszeichen verwendet, auch wenn eine wiederholte Beschreibung aus Vereinfachungsgründen entfällt.

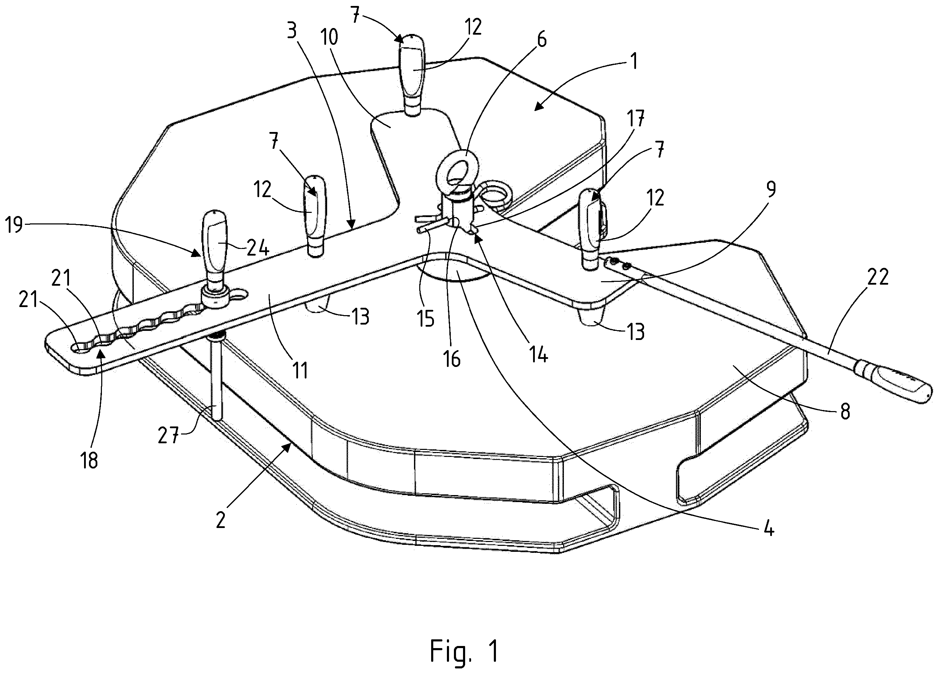

Die Figuren 1 bis 3 zeigen eine erste Ausführungsvariante eines erfindungsgemäßen Anschlagmittels 1 in gekoppeltem Zustand mit einer Sattelkupplung 2.

Die Figur 1 zeigt das Anschlagmittel 1 in einer Perspektive. Das Anschlagmittel 1 weist eine Traverse 3 und einen Zugsattelzapfen 4 auf. Das Anschlagmittel 1 ist über den Zugsattelzapfen 4 mit der Sattelkupplung 2 gekoppelt.

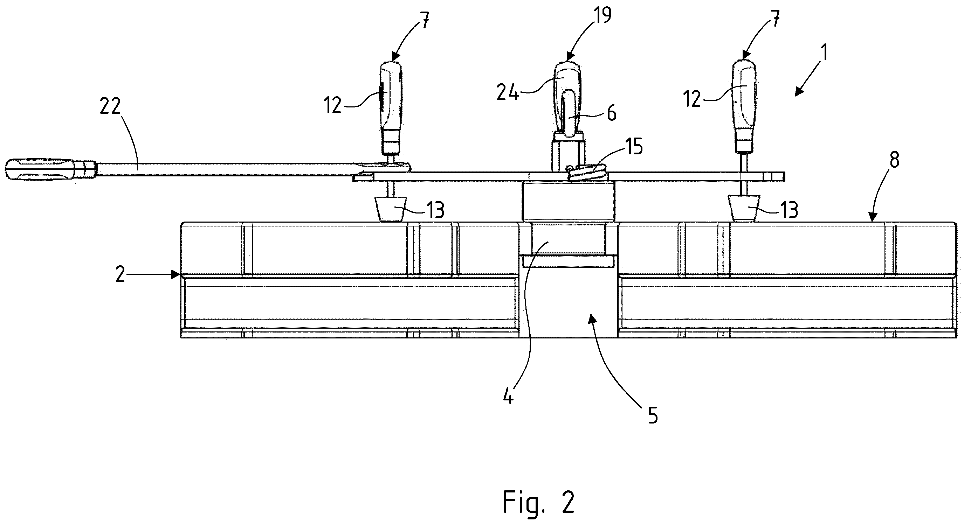

Die Kopplung zwischen Anschlagmittel 1 und der Sattelkupplung 2 ist insbesondere in der in Figur 2 gezeigten Seitenansicht zu sehen. Die Sattelkupplung 2 weist einen Aufnahmebereich 5 auf, in welchen der Zugsattelzapfen 4 des Anschlagmittels 1 hineingeschoben und mit einem nicht näher dargestellten Arretiermechanismus der Sattelkupplung 2 gesichert werden kann.

Der Zugsattelzapfen 4 weist ein Kopplungselement 6 zur Kopplung des Anschlagmittels 1 mit einer nicht näher dargestellten Hebevorrichtung auf. Das Kopplungselement 6 ist als Ringschraube ausgebildet. Wird die Hebevorrichtung mit dem Kopplungselement 6 verbunden, kann das Anschlagmittel 1 zusammen mit der an dem Anschlagmittel 1 gekoppelten Sattelkupplung 2 durch die Hebevorrichtung angehoben und bewegt werden.

Die Traverse 3 weist drei Fixierungselemente 7 auf. Erfindungsgemäß kann die Traverse 3 mittels der Fixierungselemente 7 relativ zu einer Sattelkupplungsplatte 8 der Sattelkupplung 2 fixiert werden. Im Vergleich zu im Stand der Technik bekannten Lösungen hat dies den Vorteil, dass das Anschlagmittel 1 im fixierten Zustand unbeweglich mit der Sattelkupplung 2 verbunden ist, so dass während des Hebe- bzw.

Transportprozesses ein Pendeln der Sattelkupplung 2 relativ zum Anschlagmittel 1 verhindert ist.

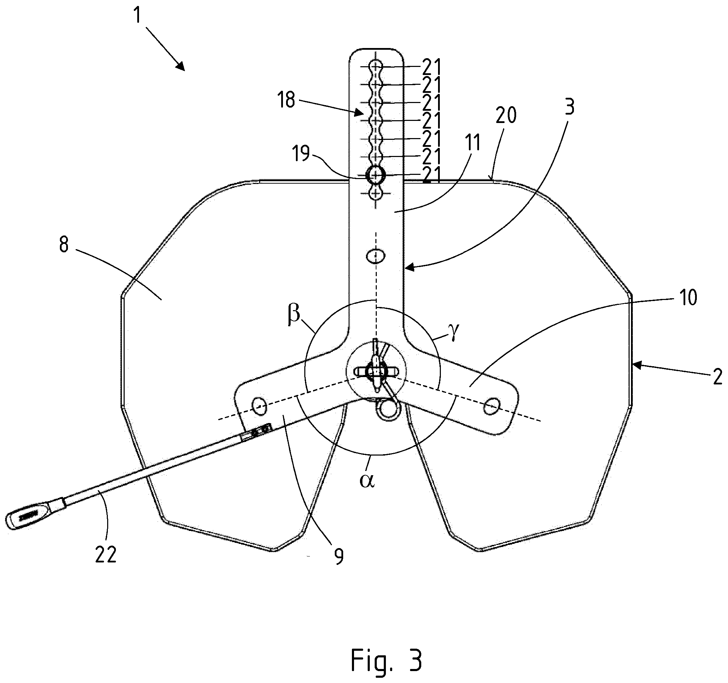

Die Traverse 3 weist drei Tragarme 9, 10, 11 auf, wobei auf jedem der drei Tragarme 9, 10, 11 jeweils eins der drei Fixierungselemente 7 angeordnet ist. Die Anordnung der drei Tragarme 9, 10, 11 zueinander ist in der in Figur 3 gezeigten Draufsicht zu sehen. Zwischen dem ersten Tragarm 9 und dem zweiten Tragarm 10 ist ein Winkel α von 140° ausgebildet. Zwischen dem ersten Tragarm 9 und dem dritten Tragarm 11 ist ein Winkel β von 110° ausgebildet. Der Winkel 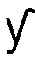 zwischen dem zweiten Tragarm 10 und dem dritten Tragarm 11 beträgt ebenfalls 110°. Durch eine entsprechende Anordnung der Tragarme 9, 10, 11 und der Fixierungselement 7 ist eine sichere Fixierung zwischen der Sattelkupplung 2 und der Traverse 3 mit möglichst wenig Fixierpunkten sichergestellt.

Die Fixierungselemente 7 sind als Fixierschrauben ausgebildet. Jeder der Tragarme 9, 10, 11 weist ein entsprechendes Durchgangsloch mit einem Gewinde zur Aufnahme der Fixierungselemente 7 auf. Die Fixierelemente 7 weisen einen Handgriff 12 auf, mittels dem die Fixierelemente 7 von einem Nutzer händisch ohne die Zuhilfenahme weiterer Werkzeuge festgezogen werden können. Die Fixierungselemente 7 weisen an ihren dem Handgriff 12 entgegengesetzten Ende einen Gummistutzen 13 auf. Über den Gummistutzen 13 kommen die Fixierelemente 7 mit der Sattelkupplungsplatte 8 in Verbindung. Die Gummistutzen 13 sorgen für einen sicheren Halt der Fixierelemente 7 und stellen zudem sicher, dass die Sattelkupplungsplatte 8 durch die Fixierelemente 7 nicht beschädigt wird.

Die Traverse 3 weist eine Öffnung 14 zur Kopplung mit dem Zugsattelzapfen 4 auf. Die Öffnung 14 ist im Schnittpunkt der Längsachsen der Tragarme 9, 10, 11 angeordnet. Im gekoppelten Zustand durchgreift der Zugsattelzapfen 4 die Öffnung 14 und ist mit einem Sicherungselement 15 fixiert. Diese Ausgestaltung hat den Vorteil, dass unterschiedliche Zugsattelzapfen 4 mit der Traverse 3 gekoppelt werden können. Je nach Dimensionierung und Beschaffenheit der Sattelkupplung 2 können die Zugsattelzapfen 4 schnell von einem Nutzer ausgetauscht werden.

Das Sicherungselement 15 ist ein Federstecker. Der Zugsattelzapfen 4 weist eine Sicherungsöffnung 16 auf, in welche das Sicherungselement 15 einführbar ist. Dies ist eine für den Nutzer einfach durchzuführende und kostengünstige Möglichkeit der Sicherung zwischen Traverse 3 und Zugsattelzapfen 4.

Die Öffnung 14 der Traverse 3 ist kreisförmig ausgebildet und weist gegenüberliegende Aussparungen 17 auf.

Der dritte Tragarm 11 der Traverse 3 ist länger ausgebildet als der erste Tragarm 9 und der zweite Tragarm 10 und erstreckt sich über den äußeren Rand der Sattelkupplung 2 hinaus.

Der dritte Tragarm 11 der Traverse 3 weist eine langlochförmige Öffnung 18 auf, wobei ein Sicherungsanschlag 19 mit der langlochförmigen Öffnung 18 gekoppelt ist und diese durchgreift. Die langlochförmige Öffnung 18 ragt im gekoppelten Zustand zwischen Traverse 3 und Sattelplatte 2 über die der Aufnahmeöffnung 5 abgewandten Seite 20 der Sattelkupplung 2 hinaus. Die langlochförmige Öffnung 18 ist aus mehreren ineinander übergehende Löcher 21 ausgebildet. Je nach Größe der Sattelkupplung 2 kann der Sicherungsanschlag 19 in das Loch 21 eingeführt werden, welches von den überstehenden Löchern 21 der der Aufnahmeöffnung 5 abgewandten Seite 20 der Sattelkupplung 2 am nächsten ist. Der Sicherungsanschlag 19 fixiert die Sattelkupplung 2 relativ zum Zugsattelzapfen 4. So ist sichergestellt, dass durch den Sicherungsanschlag 19 die Sattelkupplung 2 auf dem Zugsattelzapfen 4 gehalten wird. Insbesondere bei einem Defekt des Arretiermechanismus der Sattelkupplung 2 kann so während des Hebevorgangs verhindert werden, dass sich die Sattelkupplung 2 von dem Zugsattelzapfen 4 löst. Zusätzlich sichert der Sicherungsanschlag 19 auch die relative Fixierung zwischen Traverse 3 und Sattelkupplungsplatte 8.

Ein Haltegriff 22 ist mit dem ersten Tragarm 9 der Traverse 3 verbunden. Während des Hebevorgangs kann mittels des Haltegriffs 22 die Position der schwebenden Sattelkupplung 2 durch einen Nutzer verändert werden.

Die Traverse 3 ist einstückig und werkstoffeinheitlich hergestellt.

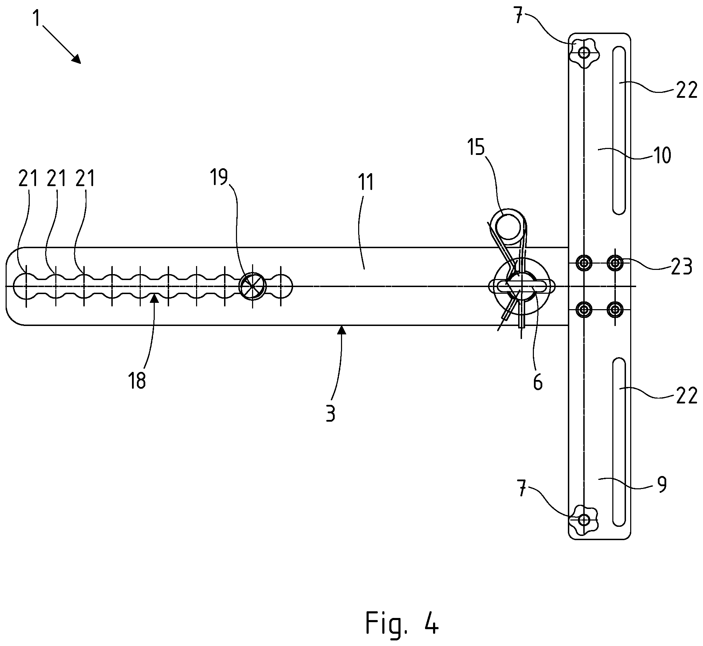

Die Figuren 4 bis 6 zeigen eine zweite Ausführungsvariante des erfindungsgemäßen Anschlagmittels 1. Das Anschlagmittel 1 ist in den Figuren 4 bis 6 nicht mit einer Sattelkupplung 2 gekoppelt. Mithin befindet es sich in einem ungekoppelten Zustand.

Die Figur 4 zeigt das erfindungsgemäße Anschlagmittel 1 in einer Draufsicht. In dieser Ausführungsvariante ist die Traverse 3 aus einem ersten Tragelement und einem zweiten Tragelement ausgebildet, wobei das erste Tragelement endseitig mit einem mittleren Abschnitt des zweiten Tragelements gekoppelt ist und das erste Tragelement den dritten Tragarm 11 und das zweite Tragelement den ersten Tragarm 9 und den zweiten Tragarm 10 ausbildet. Das erste und zweite Tragelement sind über vier Schraubverbindungen 23 miteinander gekoppelt. Diese Ausgestaltungsvariante hat den Vorteil, dass das Anschlagmittel 1 im unmontierten Zustand des ersten und zweiten Tragelements sehr platzsparend transportiert werden kann.

Der erste Tragarm 9 und der zweite Tragarm 10 weisen jeweils einen Haltegriff 22 auf.

Im Gegensatz zur ersten Ausführungsvariante weisen nur der erste Tragarm 9 und der zweite Tragarm 10 ein Fixierungselement 7 auf. Zusammen mit dem Sicherungsanschlag 19 kann auch in diesem Fall eine sichere Fixierung zwischen Traverse 3 und der Sattelkupplungsplatte 8 sichergestellt werden.

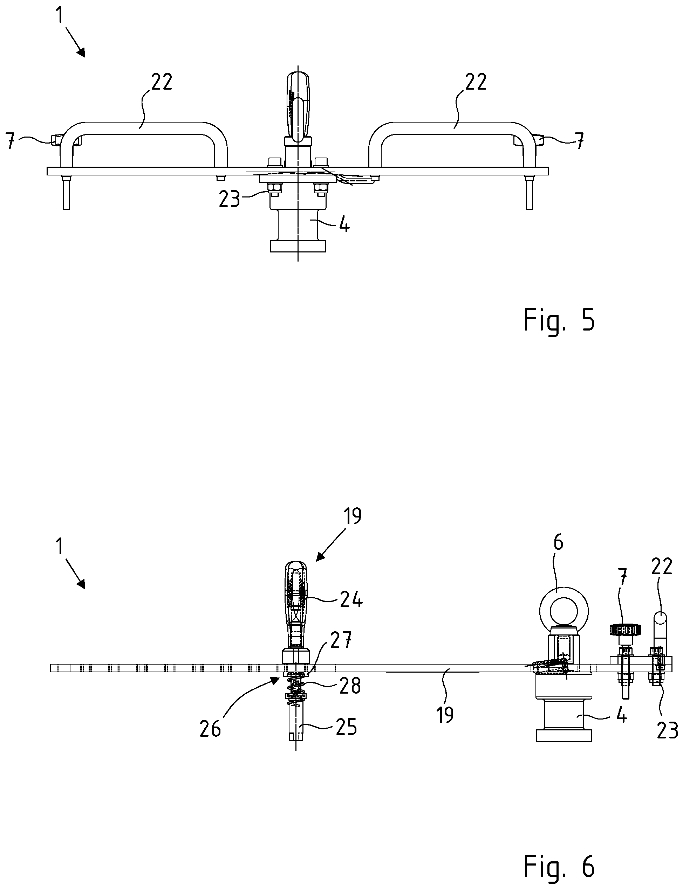

In Figur 6 ist der Sicherungsanschlag 19 im Detail dargestellt. Dabei handelt es sich um einen Sicherungsstift, welcher einen Haltegriff 24 und einen Anschlagstift 25 zur Sicherung der Sattelkupplung 2 aufweist. Der Sicherungsanschlag 19 weist ferner einen Rastmechanismus 26 auf, welche zwischen dem Haltegriff 24 und dem Anschlagstift 25 angeordnet ist. Der Rastmechanismus 26 ist aus einem kreisförmigen Rastelement 27 und einer Druckfeder 28 ausgebildet. Ist der Sicherungsanschlag 19 in einem Loch 21 der langlochförmigen Öffnung 18 positioniert, greift das Rastelement 27 in das Loch 21 ein und fixiert das Sicherungselement 19 in seiner Position. Wird das Sicherungselement 19 von einem Nutzer über den Haltegriff 24 nach oben, mithin weg von dem Lochs 21 gezogen, wird die Druckfeder 28 zusammengestaucht und das Rastelement 27 aus dem Loch 21 gezogen. In diesem Zustand kann das Sicherungselement 19 innerhalb der langlochförmigen Öffnung 18 verschoben werden und an einem anderen Loch 21 positioniert werden. Löst der Nutzer seinen Griff, wird

das Rastelement 27 durch die Druckfeder 28 in das ausgewählte Loch 21 gedrückt und das Sicherungselement 19 ist in seiner neuen Position fixiert. Ein entsprechendes Sicherungselement 19 kann auch bei der ersten Ausführungsvariante eingesetzt werden.

Die Öffnung 14 ist im Bereich des Gewichtschwerpunkts der Traverse 3 angeordnet. Dies hat den Vorteil, dass das Anschlagmittel 1 bei Kopplung mit der Hebevorrichtung im Wesentlichen horizontal ausgerichtet ist.

### Bezugszeichen:

1 - Anschlagmittel
2 - Sattelkupplung
3 - Traverse
4 - Zugsattelzapfen
5 - Aufnahmebereich
6 - Kopplungselement
7 - Fixierungselement
8 - Sattelkupplungsplatte
9 - erster Tragarm
10 - zweiter Tragarm
11 - dritter Tragarm
12 - Handgriff
13 - Gummistutzen
14 - Öffnung
15 - Sicherungselement
16 - Sicherungsöffnung
17 - Aussparung
18 - langlochförmige Öffnung
19 - Sicherungsanschlag
20 - Seite v. 2
21 - Loch
22 - Haltegriff
23 - Schraubverbindung
24 - Handgriff
25 - Anschlagstift
26 - Rastmechanismus
27 - Rastelement
28 - Druckfeder
α - Winkel
β - Winkel
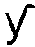 - Winkel

## Patentansprüche

1. Anschlagmittel (1) für eine Sattelkupplung (2), aufweisend eine Traverse (3) und einen Zugsattelzapfen (4) zur Kopplung mit der Sattelkupplung (2), wobei der Zugsattelzapfen (4) mit der Traverse (3) koppelbar ist und der Zugsattelzapfen (4) ein Kopplungselement (6) zur Kopplung des Anschlagmittels (1) mit einer Hebevorrichtung aufweist, wobei die Traverse (3) wenigstens zwei Fixierungselemente (7) zur Fixierung der Traverse (3) relativ zu einer Sattelkupplungsplatte (8) der Sattelkupplung (2) aufweist.

2. Anschlagmittel (1) nach Anspruch 1, **dadurch gekennzeichnet, dass** die Traverse (3) drei Tragarme (9, 10, 11) aufweist, wobei die wenigstens zwei Fixierungselemente (7) an wenigstens zwei der Tragarme (9, 10, 11) angeordnet sind.

3. Anschlagmittel (1) nach Anspruch 1 oder 2, **dadurch gekennzeichnet, dass** die Traverse (3) eine Öffnung (14) zur Kopplung mit dem Zugsattelzapfen (4) aufweist, dergestalt, dass der Zugsattelzapfen (4) die Öffnung (14) durchgreift und mit einem Sicherungselement (15) fixierbar ist.

4. Anschlagmittel (1) nach Anspruch 3, **dadurch gekennzeichnet, dass** das Sicherungselement (15) ein Federstecker ist, wobei der Zugsattelzapfen (4) eine Sicherungsöffnung (16) aufweist in die der Federstecker einführbar ist.

5. Anschlagmittel (1) nach Anspruch 3 oder 4, **dadurch gekennzeichnet, dass** die Öffnung (14) der Traverse (3) kreisförmig mit gegenüberliegenden Aussparungen (17) ausgebildet ist.

6. Anschlagmittel (1) nach einem der Ansprüche 3 bis 5, **dadurch gekennzeichnet, dass** die Öffnung (14) im Bereich des Gewichtschwerpunkts der Traverse (3) angeordnet ist.

7. Anschlagmittel (1) nach einem der Ansprüche 1 bis 6, **dadurch gekennzeichnet, dass** die Traverse (3) eine langlochförmige Öffnung (18) aufweist, wobei ein Sicherungsanschlag (19) mit der langlochförmigen Öffnung (18) koppelbar ist.

8. Anschlagmittel (1) nach Anspruch 7, **dadurch gekennzeichnet, dass** die langlochförmige Öffnung (18) auf einem Tragarm (9, 10, 11) der Traverse (3) angeordnet ist.

9. Anschlagmittel (1) nach Anspruch 7 oder 8, **dadurch gekennzeichnet, dass** die langlochförmige Öffnung (18) aus mehreren ineinander übergehenden Löchern (21) ausgebildet ist.

10. Anschlagmittel (1) nach einem der Ansprüche 1 bis 9, **dadurch gekennzeichnet, dass** das Kopplungselement (6) eine Ringschraube ist.

11. Anschlagmittel (1) nach einem der Ansprüche 1 bis 10, **dadurch gekennzeichnet, dass** die Fixierungselemente (7) Fixierschrauben sind, wobei die Traverse (3) entsprechende Durchgangslöcher mit einem Gewinde zur Aufnahme der Fixierschrauben aufweist.

12. Anschlagmittel (1) nach einem der Ansprüche 1 bis 11, **dadurch gekennzeichnet, dass** wenigstens ein Haltegriff (22) mit der Traverse (3) verbunden ist.

13. Anschlagmittel (1) nach einem der vorangegangenen Ansprüche, **dadurch gekennzeichnet, dass** die drei Tragarme (9, 10, 11) jeweils in einem Winkel (α, β, 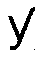 ) zwischen 90° und 180° zueinander angeordnet sind.

14. Anschlagmittel (1) nach einem der Ansprüche 1 bis 13, **dadurch gekennzeichnet, dass** die Traverse (3) einstückig und werkstoffeinheitlich hergestellt ist.

15. Anschlagmittel (1) nach einem der vorangegangenen Ansprüche, **dadurch gekennzeichnet, dass** die Traverse (3) ein erstes Tragelement und ein zweites Tragelement aufweist, wobei das erste Tragelement endseitig mit einem mittleren Abschnitt des zweiten Tragelements gekoppelt ist, wobei das erste Tragelement den ersten Tragarm (9) ausbildet und das zweite Tragelement den zweiten Tragarm (10) und den dritten Tragarm (11) ausbildet.
